# EUROPEAN PATENT APPLICATION

(11) **EP 4 628 332 A1**
(43) Date of publication of application: **08.10.2025**
(21) Application number: 23896200.5
(22) Date of filing: 13.09.2023
(51) Int. Cl.: B60G 11/00, B60G 11/16, B62D 63/04

(54) **DIFFERENTIAL DRIVE DEVICE AND ROBOT**

(30) Priority: 02.12.2022 CN 202223255001 U
(71) Applicant: Hangzhou Hikrobot Co., Ltd., Hangzhou, Zhejiang 310051 (CN)
(72) Inventor: ZHAO, Jiaxuan, Hangzhou, Zhejiang 310051 (CN); CHEN, Wen, Hangzhou, Zhejiang 310051 (CN)
(74) Representative: Epping - Hermann - Fischer
(86) International application number: PCT/CN2023/118571
(87) International publication number: WO 2024/114043

(57) **Abstract**

A differential drive device and a robot. The differential drive device comprises an elastic suspension assembly (10) and a differential drive assembly (20). The elastic suspension assembly (10) comprises a first bracket (110), a linear rotation mechanism (180), a transmission shaft (160), and an elastic member (120). The linear rotation mechanism (180) is fixedly connected to the first bracket (110) and is provided with a linear guide channel. The transmission shaft (160) has a first part (161) and a second part (162) distributed along the axial direction of the transmission shaft. The axial direction of the transmission shaft (160) is the same as the extension direction of the linear guide channel. The first part (161) is inserted into the linear guide channel of the linear rotation mechanism (180). The first part (161) can rotate around its own axis in the linear guide channel and can move in the extension direction of the linear guide channel. The differential drive assembly (20) is connected to the first part (161). The transmission shaft (160) can be driven by the differential drive assembly (20) to move. The elastic member (120) is located on one side of the first part (161), is rotatably connected to the second part (162), and moves in the extension direction of the linear guide channel along with the first part (161) to generate elastic deformation or elastic recovery.

## Description

The present disclosure claims the priority to a Chinese patent application 202223255001.X filed with the China National Intellectual Property Administration (CNIPA) on December 2, 2022 and entitled "DIFFERENTIAL DRIVE DEVICE AND ROBOT", which is incorporated herein by reference in its entirety.

### Technical Field

The present disclosure relates to the technical field of transport vehicle, in particular to a differential drive device and a robot.

### Background

A robot refers to a transport vehicle equipped with an electromagnetic or optical automated guided means that can travel along a specified guidance path. An elastic suspension assembly of the robot may include multiple springs, a transmission shaft, and a connecting plate. The transmission shaft is rotatably arranged on the connecting plate and is connected to a differential drive assembly, such that the differential drive assembly can drive the transmission shaft to rotate relative to the connecting plate. The multiple springs are distributed in periphery of the transmission shaft and fixed to the connecting plate. The multiple springs play a role in shock absorption, while also ensuring that the automated guided vehicle will not tilt sideways. However, this will result in a larger space occupied by the elastic suspension assembly.

### Summary

The purpose of embodiments of the present disclosure is to provide a differential drive device and a robot for solving the problem of larger space occupied by an elastic suspension assembly.

To achieve the above purpose, the embodiments of the present disclosure provide the following technical solutions.

In an aspect, a differential drive device is provided. The differential drive device includes an elastic suspension assembly and a differential drive assembly. The elastic suspension assembly includes a first bracket, a linear rotation mechanism, a transmission shaft, and an elastic member. The linear rotation mechanism is fixedly connected to the first bracket and has a linear guide channel. The transmission shaft has a first part and a second part distributed along an axial direction of the transmission shaft; the axial direction of the transmission shaft is the same as an extension direction of the linear guide channel; the first part is inserted into and connected to the linear guide channel of the linear rotation mechanism, and the first part can rotate around its own axis in the linear guide channel and move along the extension direction of the linear guide channel; the differential drive assembly is located on one side of the first part away from the second part and is connected to the first part. The transmission shaft can be driven by the differential drive assembly to move. The elastic member is located on one side of the first part, and is rotatably connected to the second part, and the elastic member undergoes elastic deformation or elastic recovery as the first part moves along the extension direction of the linear guide channel.

When the differential drive assembly travels on an uneven surface, which causes the differential drive assembly (such as the travelling wheel) to shake up and down, the differential drive assembly may drive the transmission shaft to move back and forth along the axis direction of the transmission shaft in the linear guide channel of the linear rotation mechanism. Then, as the first part of the transmission shaft moves along the extension direction of the linear guide channel, the elastic member undergoes elastic deformation or elastic recovery, so that the differential drive assembly may cause the elastic member to act as a shock-absorbing vehicle frame along the axis direction of the transmission shaft, to enable the vehicle frame to move relatively smoothly. Since the extension and compression direction of the elastic member is approximately the same as the axial direction of the transmission shaft, the situations such as lateral tilt of the vehicle frame can further be avoided. Therefore, compared with the background, the differential drive device of the present embodiment reduces the number of elastic members, thereby reducing the space for the elastic suspension assembly while further avoiding the lateral tilt of the vehicle frame. The transmission shaft is inserted into and connected to the linear guide channel of the linear rotation mechanism, and the transmission shaft may perform both linear movement along the extension direction of the linear guide channel and rotation movement in the linear guide channel.

Optionally, the first bracket includes a first connecting plate and a pressure cap; the linear rotation mechanism penetrates the first connecting plate and is fixedly connected to the first connecting plate; the pressure cap abuts against an end of the elastic member away from the transmission shaft and is fixed to the first connecting plate.

Optionally, the elastic suspension assembly further includes a rotary mechanism and a magnetic member; the rotary mechanism includes a first sliding part and a second sliding part which rotate synchronously; the first sliding part and the second sliding part can move relative to each other along an axial direction of the linear guide channel; the transmission shaft further has a third part located between the first part and the second part, and the first sliding part is fixedly connected to the third part; the first bracket is rotatably connected to the second sliding part and further prevents movement of the second sliding part along the axial direction of the linear guide channel; and the magnetic member is arranged on the second sliding part.

Optionally, the first sliding part is a gear, the second sliding part is a gear ring, and the gear ring is adaptively and coaxially sleeved on the gear.

Optionally, diameters of the first part, the third part, and the second part decrease sequentially.

Optionally, the elastic suspension assembly further includes a connecting pin; the transmission shaft further has a fourth part located on one side of the first part away from the second part; the fourth part is rotatably connected to the connecting pin, and the connecting pin is fixedly connected to the differential drive assembly.

Optionally, the elastic suspension assembly further includes a second bracket which is fixedly connected to the connecting pin; the second bracket has an mounting channel, and the linear rotation mechanism is located in the mounting channel with a gap between the linear rotation mechanism and the mounting channel. The differential drive assembly includes a transmission, a drive mechanism, and a travelling wheel; the drive mechanism is fixedly connected to the transmission, and an output shaft of the drive mechanism is connected to an input shaft of the transmission; the travelling wheel is coaxially connected to an output shaft of the transmission; the transmission is fixedly connected to the second bracket.

Optionally, the elastic suspension assembly further includes a first blocking member and a second blocking member, the first blocking member is arranged on the first bracket, and the second blocking member is fixedly arranged on the second bracket; wherein, in a case that the first blocking member is in contact with the second blocking member, rotation of the transmission shaft is prevented.

Optionally, the elastic suspension assembly further includes a rotary bearing, and the elastic member is rotatably connected to the second part through the rotary bearing.

In another aspect, a robot is provided. The robot includes the differential drive device as described in any of the above embodiments and a vehicle frame. The vehicle frame is fixedly connected to an elastic suspension assembly of the differential drive device.

### Brief Description of the Drawings

In order to illustrate the technical solution in the present disclosure more clearly, a brief introduction to the accompanying drawings required in some embodiments of the present disclosure will be provided below. Obviously, the accompanying drawings described below are only for some embodiments of the present disclosure. For those skilled in the art, other accompanying drawings may also be obtained based on these accompanying drawings. In addition, the accompanying drawings in the following description can be regarded as schematic diagrams and are not limitations on the actual size of products, the actual process of methods, and the actual timing sequence of signals, etc. which are involved in the embodiments of the present disclosure.
Fig. 1 is a structure diagram of a differential drive device according to some embodiments;
Fig. 2 is a cross-sectional view taken along line C-D in Fig. 1;
Fig. 3 is a cross-sectional view of an elastic suspension assembly taken along line A-B in Fig. 1;
Fig. 4 is a structure diagram of a robot according to some embodiments.

### Detailed Description

In the following, technical solutions in embodiments of the present disclosure will be clearly and completely described in combination with the accompanying drawings. Obviously, the described embodiments are only some, and not all, of the embodiments of the present disclosure. All other embodiments obtained by those skilled in the art based on the embodiments of the present disclosure fall into the scope of protection of the present disclosure.

Unless otherwise specified in the context, the term "include" is interpreted throughout the specification and claims as open and inclusive, i.e., as "including but not limited to". In the description of the specification, the terms such as "one embodiment", "some embodiments", "exemplary embodiments", "example" or "some examples" are intended to indicate that a specific feature, structure, material or characteristic related to the embodiment(s) or example(s) is included in at least one embodiment or example of the present disclosure. The schematic representation of the above terms does not necessarily refer to the same embodiment or example. In addition, the specific feature, structure, material, or characteristic may be included in any one or multiple embodiments or examples in any appropriate manner.

In the following, terms "first" and "second" are only used for the purpose of description and cannot be understood as indicating or implying relative importance or implying the number of technical features indicated. Thus, features limited with "first" and "second" may explicitly or implicitly include one or more of these features. In the description of the embodiments of the present disclosure, unless otherwise specified, the meaning of "multiple" refers to two or more.

When describing some embodiments, the expression "connection" and its derivatives may be used. For example, when describing some embodiments, the term "connection" may be used to indicate that two or more components are in direct physical or electrical contact with each other. The embodiments described here are not necessarily limited to the content of the present disclosure.

"at least one of A, B, and C" has the same meaning as "at least one of A, B, or C", both of which include the following combinations of A, B, and C: only A, only B, only C, a combination of A and B, a combination of A and C, a combination of B and C, and a combination of A, B, and C.

"A and/or B" includes the following three combinations: only A, only B, and a combination of A and B.

The use of "be adapted to" or "be configured to" herein means an open and inclusive language, which does not exclude devices that are adapted or configured to perform additional tasks or steps.

In addition, the use of "based on" means openness and inclusiveness, as processes, steps, calculations, or other actions based on one or more conditions or values can be based on additional conditions or values beyond those described in practice.

As used herein, "about", "roughly", or "approximately" include the stated value and an average value within an acceptable deviation range for a specific value, wherein the acceptable deviation range is determined by those of ordinary skill in the art considering the measurement being discussed and the error associated with the measurement of a specific quantity (i.e., limitation of the measurement system).

As used herein, "parallel", "vertical", and "equal" include the stated situation and situations that are similar to the stated situation, and the range of the similar situations is within an acceptable deviation range, wherein the acceptable deviation range is determined by those of ordinary skill in the art considering the measurement being discussed and the error associated with the measurement of a specific quantity (i.e., the limitation of the measurement system). For example, "parallel" includes absolute parallel and approximate parallel, wherein the acceptable deviation range for approximate parallel may be within 5°; "vertical" includes absolute vertical and approximate vertical, wherein the acceptable deviation range for approximate vertical may also be within 5°, for example; "equal" includes absolute equal and approximate equal, where the acceptable deviation range for approximate equal may be, for example, that the difference between two values which are equal is less than or equal to 5% of either one of the two value.

An embodiment of the present disclosure provides a differential drive device. The differential drive device may support a main body component and is configured to drive the main body component to move. The main body component may be arranged above the differential drive device along a direction of gravity. For example, a differential drive assembly may be applied to a robot (such as a transport robot), and the transport robot may be a transport vehicle. In this case, the differential drive assembly may support a vehicle frame of the transport vehicle.

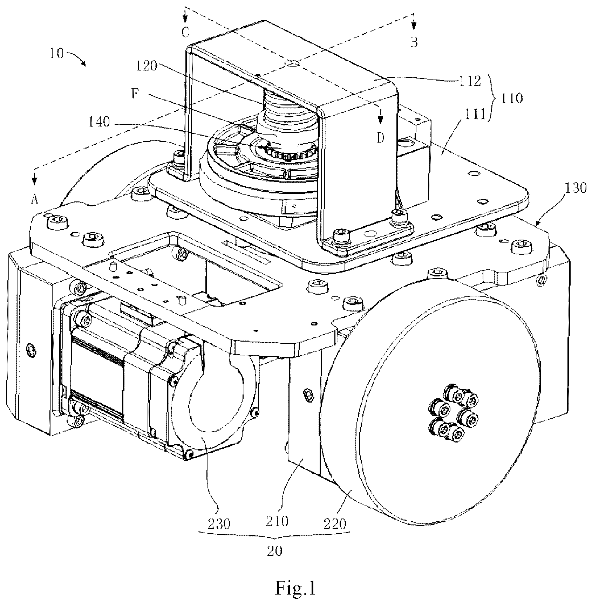

The schematic diagram of the differential drive device may be referred to Figs. 1, 2, and 3. The differential drive device may include an elastic suspension assembly 10 and a differential drive assembly 20.

The differential drive assembly 20 has a transmission 210, a travelling wheel 220, and a drive mechanism 230. There may be one or more travelling wheels 220, including such as a left travelling wheel 220 and a right travelling wheel 220. The differential drive assembly 20 may be configured to respectively drive the left travelling wheel 220 and the right travelling wheel 220. A movement speed of the left travelling wheel 220 may be different from that of the right travelling wheel 220.

The description of the transmission 210 and the drive mechanism 230 may be referred in the subsequent embodiments, and will not be described in detail here.

The elastic suspension assembly 10 may be arranged between the main body component and the differential drive assembly 20, and may be fixedly connected to the main body component to suppress vibration caused by the differential drive assembly 20, so that the vibration intensity transmitted from the differential drive assembly 20 to the main body component is reduced. For example, when the transport vehicle travels on uneven ground, the travelling wheel 220 in the differential drive assembly 20 vibrate in a direction of weight, and the elastic suspension assembly 10 absorbs this vibration, resulting in less vibration to the main body component.

Firstly, the structure of the elastic suspension assembly 10 will be described.

As an example, the elastic suspension assembly 10 may include a first bracket 110, a linear rotation mechanism 180, a transmission shaft 160, and an elastic member 120.

The first bracket 110 may be fixedly connected to the main body component mentioned above.

The linear rotation mechanism 180 is fixedly connected to the first bracket 110. The linear rotation mechanism 180 has a linear guide channel. For example, if the linear rotation mechanism 180 may be a linear bearing, then the linear guide channel may be an inner hole of the linear bearing. For another example, if the linear rotation mechanism 180 may be an oil-free bushing, then the linear guide channel may be an inner hole of the oil-free bushing. For another example, if the linear rotation mechanism 180 may be a micro guide assembly, then the linear guide channel may be an inner hole of the micro guide assembly. An extension direction of the linear guide channel is a guide direction of the linear rotation mechanism 180.

The transmission shaft 160 is inserted into and connected to the linear guide channel of the linear rotation mechanism 180. The transmission shaft 160 can perform both a linear movement along the extension direction of the linear guide channel and a rotation movement in the linear guide channel.

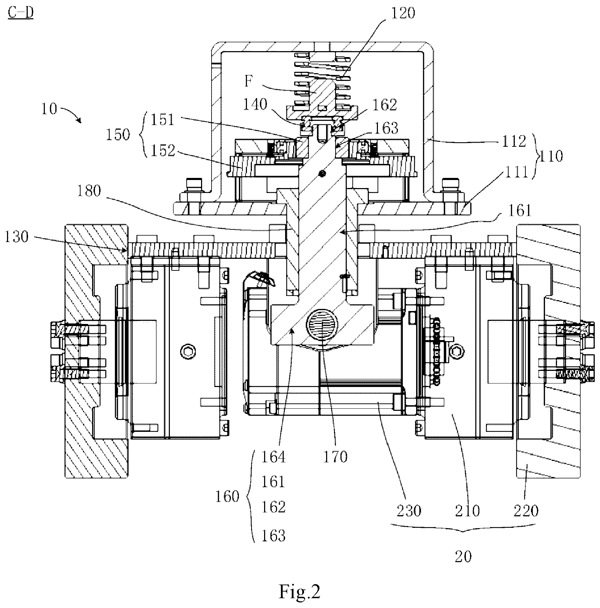

Specifically, the transmission shaft 160 has a first part 161 and a second part 162 distributed along an axial direction of the transmission shaft 160. It means that the first part 161 has an area directly facing the second part 162 along the axial direction of the transmission shaft 160. For example, the first part 161 and the second part 162 may be coaxially arranged. For another example, the first part 161 and the second part 162 may also be arranged around different axes (i.e. the axis of the first part 161 does not coincide with the second part 162); at this time, an axial direction of the first part 161 may serve as the axial direction of the transmission shaft 160. The axial direction of the transmission shaft 160 is the same as the extension direction of the linear guide channel (such as an up-down direction shown in Fig. 2, or the direction of gravity). The first part 161 is inserted into and connected to the linear guide channel of the linear rotation mechanism 180 (for example, the first part 161 is inserted into and connected to the inner hole of the linear bearing). The first part 161 can rotate around its own axis in the linear guide channel and move along the extension direction of the linear guide channel.

The differential drive assembly 20 is located on one side of the first part 161 away from the second part 162 (i.e., below the transmission shaft 160) and is connected to the first part 161. The transmission shaft 160 can be driven by the differential drive assembly 20 to move (including a linear movement and/or rotation movement). It can be understood that the first part 161 and the second part 162 are fixedly connected, for example, the first part 161 and the second part 162 may be integrally formed; based on this, when the first part 161 is driven by the differential drive assembly 20 to move, the transmission shaft 160 including the first part 161 and the second part 162 also moves as a whole.

The elastic member 120 is rotatably connected to the second part 162. When the second part 162 is driven by the differential drive assembly 20 to move back and forth along the extension direction of the linear guide channel, the elastic member 120 may undergo elastic deformation or elastic recovery; when the second part 162 is driven by the differential drive assembly 20 to rotate around the axis of the second part 162 itself, the elastic member 120 may not rotate, such that torsional deformation of the elastic member 120 can be avoided.

As an example, the elastic suspension assembly 10 further includes a rotary bearing 140, and the elastic member 120 is rotatably connected to the second part 162 through the rotary bearing 140. As an example, the rotary bearing 140 may be a planar bearing, and the elastic member 120 and the second part 162 are respectively connected to two faces of the planar bearing. As another example, the rotary bearing 140 may be a ball bearing, and the elastic member 120 and the second part 162 may be respectively connected to an inner ring and an outer ring of the ball bearing. As another example, the rotary bearing 140 may further be a self-aligning roller bearing, and the elastic member 120 and the second part 162 may be respectively connected to an inner ring and an outer ring of the self-aligning roller bearing. As another example, the rotary bearing 140 may further be a double row angular contact ball bearing, and the elastic member 120 and the second part 162 may be respectively connected to the inner ring and the outer ring of the double row angular contact ball bearing. The rotary bearing 140 can enable the transmission shaft 160 to rotate relative to the elastic member 120.

In some examples, the elastic suspension assembly 10 further includes a bearing seat F, which is rotatably connected to the second part 162 through the rotary bearing 140, and the elastic member 120 is fixedly connected to the bearing seat F. For example, the bearing seat F and the second part 162 are respectively connected to the two faces of the planar bearing. For example, the bearing seat F and the second part 162 may be respectively connected to the inner ring and the outer ring of the ball bearing.

For example, the elastic member 120 may be a spring. One end of the spring is coaxially and rotatably arranged on the second part 162 of the transmission shaft 160, and the other end of the spring abuts against the first bracket 110 or the main body component mentioned above.

The elastic member 120 undergoes elastic deformation or elastic recovery as the first part 161 moves along the extension direction of the linear guide channel. For example, as the differential drive assembly 20 moves upward, the differential drive assembly 20 can drive the first part 161 to move upward, and the first part 161 drives the second part 162 to also move upward; then, the second part 162 presses the elastic member 120 due to the upward movement, so that the elastic member 120 is compressed. As the differential drive assembly 20 moves downward, the differential drive assembly 20 drives the first part 161 to move downward, and the first part 161 drives the second part 162 to also move downward; then, the second part 162 separates from the elastic member 120 due to the downward movement, so that elasticity of the elastic member 120 is recovered.

As an example, an extension and compression direction of the elastic member 120 coincides with an axis direction of the transmission shaft 160. In some examples, the elastic member 120 is coaxially arranged with the transmission shaft 160.

When the differential drive assembly 20 travels on an uneven surface, which causes the differential drive assembly 20 (such as the travelling wheel 220) to shake up and down, the differential drive assembly 20 may drive the transmission shaft 160 to move back and forth in the linear guide channel of the linear rotation mechanism 180 along the axis direction of the transmission shaft 160 (moving in the up-down direction as shown in Fig. 2). Then, as the first part 161 of the transmission shaft 160 moves along the extension direction of the linear guide channel, the elastic member 120 undergoes elastic deformation or elastic recovery, so that the differential drive assembly 20 may cause the elastic member 120 to act as a shock-absorbing vehicle frame along the axis direction of the transmission shaft 160, to enable the vehicle frame to move relatively smoothly. Since the extension and compression direction of the elastic member 120 is approximately the same as the axial direction of the transmission shaft 160, the situations such as lateral tilt of the vehicle frame can further be avoided. It can be seen that the differential drive device of the present embodiment can achieve the function of the shock-absorbing vehicle frame by only using one elastic member 120. Therefore, compared with the background, the differential drive device of the present embodiment reduces the number of elastic members 120, thereby reducing the space for the elastic suspension assembly 10 while further avoiding the lateral tilt of the vehicle frame.

In addition, when the differential drive assembly 20 (such as the two travelling wheels 220) rotates around an axis of the second part 162 of the transmission shaft 160, the differential drive assembly 20 may drive the transmission shaft 160 to rotate. Since one end of the elastic member 120 is rotatably connected to the second part 162 of the transmission shaft, the transmission shaft may rotate relative to the elastic member 120. Also, since the other end of the elastic member 120 is fixedly connected to the first bracket 110, the transmission shaft 160 may rotate relative to the first bracket 110 which is fixedly connected to the vehicle frame, so that the direction of the differential drive assembly 20 (such as the two travelling wheels 220) may be changed relative to the first bracket 110 (or the vehicle frame). Since the transmission shaft 160 rotates in the linear guide channel of the linear rotation mechanism 180, and the linear rotation mechanism 180 is fixedly connected to the first bracket 110 which is fixedly connected to the vehicle frame, the differential drive assembly 20 (such as the two travelling wheels 220) rotates relative to the vehicle frame around the axis of the second part 162. Then, after the differential drive assembly 20 stops rotating, a position of the differential drive assembly 20 (such as the two travelling wheels 220) changes as compared to that before rotation. At this time, when the differential drive assembly 20 (such as the two travelling wheels 220) moves along a straight line, a travel direction of the vehicle frame is changed. During this process, due to the rotational connection of the elastic member 120 with the second part 162, when the transmission shaft 160 is rotating, the transmission shaft 160 can be prevented from driving one end of the elastic member 120 close to the transmission shaft 160 to rotate through the rotatable relationship between the elastic member 120 and the second part 162, thereby preventing the elastic member 120 from twisting and deforming which will result in damage on the elastic member 120, due to the fact that one end of the elastic member 120 rotatably connected to the second part 162 (i.e., one end of the elastic member 120 close to the transmission shaft 160) rotates and the other end of the elastic member 120 (i.e., the end of the elastic member 120 away from the transmission shaft 160) does not rotate.

As an example, the first bracket 110 may include a first connecting plate 111. The linear rotation mechanism 180 penetrates the first connecting plate 111 (e.g., a first through-hole of the first connecting plate 111) and is fixedly connected to the first connecting plate 111 (e.g., the first through-hole of the first connecting plate 111). In some examples, the vehicle frame is fixedly connected to the first connecting plate 111, and the vehicle frame abuts against or is fixed to one side of the elastic member 120 away from the second part 162. In other examples, the first bracket 110 may further include a pressure cap 112; the pressure cap 112 abuts against or is fixed to one side of the elastic member 120 away from the second part 162, and the pressure cap 112 is fixed on the first connecting plate 111. The vehicle frame is fixedly connected to the first connecting plate 111 or the pressure cap 112, so as to limit the elastic member 120 between the pressure cap 112 and the first connecting plate 111. When the transmission shaft is driven by the linear rotation mechanism 180 to move upward, the elastic member 120 is compressed due to the stop of the vehicle frame or the pressure cap 112, thereby the vibration of the vehicle frame is reduced.

In some embodiments, the elastic suspension assembly 10 further includes a rotary mechanism 150 and a magnetic member. The transport vehicle may further be equipped with a measuring device and a vehicle control device. The measuring device may be an angle sensor, a speed sensor, etc., which is configured to measure rotation amount of the magnetic member (such as rotation speed and rotation angle). The vehicle control device may acquire measurement data from the measuring device and control a travel direction of the transport vehicle based on the acquired measurement data.

Specifically, the rotary mechanism 150 includes a first sliding part 151 and a second sliding part 152 which rotate synchronously. The first sliding part 151 is fixedly connected to the transmission shaft 160. The magnetic member is arranged on the second sliding part 152. In this way, when the transmission shaft 160 rotates around its own axis, the transmission shaft 160, the first sliding part 151, and the second sliding part 152 all rotate synchronously, so that the magnetic member on the second sliding part 152 also rotates accordingly. Then the rotation amount (such as the rotation speed and the rotation angle) of the magnetic member may be measured by the measuring device such as the angle sensor, etc. The rotation amount of the magnetic member (such as the rotation speed and the rotation angle) may be considered as the rotation amount of the second sliding part 152 (such as the rotation speed and the rotation angle), so that the vehicle control device may obtain the rotation amount of the second sliding part 152 (such as the rotation angle and the rotation speed) measured by the measuring device. Due to the synchronous rotation of the transmission shaft 160, the first sliding part 151 and the second sliding part 152, that is, due to the fact that the rotation amount (such as the rotation angle and the rotation speed) of the second sliding part 152 may be expressed as the rotation amount (such as the rotation angle and the rotation speed) of the transmission shaft 160, the vehicle control device can obtain the rotation amount (such as the rotation angle and the rotation speed) of the transmission shaft 160, and then control the travel direction of the transport vehicle based on the rotation amount of the transmission shaft 160.

As an example, the drive shaft 160 further has a third part 163 located between the first part 161 and the second part 162. The first part 161, the second part 162 and the third part 163 may be fixedly connected, for example, the first part 161, the second part 162 and the third part 163 can be integrally formed. In addition, the first part 161, the second part 162 and the third part 163 may be arranged coaxially. The first sliding part 151 is fixedly connected to the third part 163.

As an example, the first sliding part 151 and the second sliding part 152 may be coaxially arranged. The first sliding part 151 and the second sliding part 152 can rotate synchronously around the axis of the transmission shaft 160. For example, the first sliding part 151 is a gear, and the second sliding part 152 is a gear ring. The gear may be fixed coaxially on the third part 163 through a flat key. The gear ring is adaptively and coaxially sleeved on the gear, wherein "adaptively" means that any tooth of the gear ring may be located between two adjacent teeth of the gear. This allows the gear ring and the gear to move relative to each other in their axis direction, and due to an interaction between the teeth of the gear and the gear ring, synchronous rotation of the gear and the gear ring is ensured.

As another example, the first sliding part 151 and the second sliding part 152 may be arranged around different axes. For example, the first sliding part 151 can rotate around the axis of the transmission shaft 160, and the axis of the second sliding part 152 is parallel to that of the first sliding part 151. For example, the first sliding part 151 is a gear (referred to as the first gear), and the second sliding part 152 is also a gear (referred to as the second gear). The first gear may be fixed coaxially on the third part 163 through the flat key, and the second gear is arranged to mesh with the first gear. That is, the rotation of the first gear will drive the second gear to rotate.

As an example, the first bracket 110 is rotatably connected to the second sliding part 152. For example, the second sliding part 152 (such as a gear ring) is rotatably connected to the first connecting plate 111. In this way, the second sliding part 152 (such as the gear ring) may rotate relative to the first connecting plate 111, and the second sliding part 152 (such as the gear ring) will not drive the first connecting plate 111 to rotate when the second sliding part 152 (such as the gear ring) rotates.

In addition, the first sliding part 151 and the second sliding part 152 may slide relative to each other along the axial direction of the linear guide channel, which means that the first sliding part 151 may move in the up-down direction relative to the second sliding part 152 as shown in Fig. 2. Since the transmission shaft 160 is fixedly connected to the first sliding part 151, then when the transmission shaft 160 moves along its axial direction (moves in the up-down direction as shown in Fig. 2), the transmission shaft 160 will drive the first sliding part 151 to move synchronously along the axial direction of the transmission shaft 160 (move in the up-down direction as shown in Fig. 2).

In some examples, in the case that the second sliding part 152 is the second gear, the second gear may be rotatably connected to the first bracket through a bearing and a fixed shaft, that is, the second gear is rotatably connected to the fixed shaft through the bearing and the fixed shaft is fixed on the first bracket 110 (such as the first connecting plate 111).

The first bracket 110 further prevents an axial sliding of the second sliding part 152 along the linear guide channel, so that the first sliding part 151 may move relative to the second sliding part 152 along the axial direction of the transmission shaft 160, and the second sliding part 152 will not move in the axial direction of the transmission shaft 160, thereby achieving sliding of the first sliding part 151 relative to the second sliding part 152 along the axial direction of the linear guide channel.

As an example, the second sliding part 152 and the first connecting plate 111 may be respectively fixedly connected to an outer ring and an inner ring of a deep groove ball bearing; wherein, through the deep groove ball bearing, the second sliding part 152 may be enabled to ratably connected to the first connecting plate 111; the second sliding part 152 may further be restricted from moving along the axis of the transmission shaft 160. For example, a bearing mounting seat is arranged between the deep groove ball bearing and the first connecting plate 111, that is, the bearing mounting seat is fixedly connected to the first connecting plate 111 and also fixedly connected to the deep groove ball bearing (such as the outer ring).

In some embodiments, diameters of the first part 161, the third part 163, and the second part 162 decrease sequentially, so that the transmission shaft 160 may form a stepped shaft with a diameter increasing from top to bottom as shown in Fig. 2. In this way, the size of the rotary bearing 140 arranged on the second part 162 and the size of the first sliding part 151 (such as a gear) arranged on the third part 163 are also smaller, thereby reducing sizes of the parts that cooperate with the rotary bearing 140 and the first sliding part 151, such as sizes of the bearing seat F and the second sliding part 152, which is beneficial for reducing the space for the elastic suspension assembly 10. In addition, the diameters of the first part 161, the third part 163, and the second part 162 decrease sequentially, which is further beneficial for reducing the weight of the transmission shaft 160.

In some embodiments, the elastic suspension assembly 10 further includes a connecting pin 170. The transmission shaft 160 further has a fourth part 164 which is located on one side of the first part 161 away from the second part 162; the fourth part 164 is rotatably connected to the connecting pin 170.

In some examples, the fourth part 164 has a third through-hole, and an axis of the third through-hole may be arranged to intersect with (e.g., be perpendicular to) the axis of the first part 161. The connecting pin 170 may be ratably arranged in the third through-hole; for example, the diameter of the connecting pin is smaller than the diameter of the third through-hole; for another example, a bearing (such as a deep groove ball bearing) is arranged between the connecting pin 170 and the third through-hole; for yet another example, a sleeve is arranged between the connecting pin and the third through-hole.

The connecting pin 170 is fixedly connected to the differential drive assembly 20. Then, when the differential drive assembly 20 moves on the uneven surface, the differential drive assembly 20 may swing (e.g. swing downward, swing upward) accordingly according to the road surface conditions (such as the concave surface and the convex surface), so that the differential drive assembly 20 drives the connecting pin 170 to rotate relative to the fourth part 164 around the axis of the connecting pin 170. Further, the differential drive assembly 20 may swing relative to the elastic suspension assembly 10, and then the differential drive assembly 20 may shake relative to the vehicle frame, thereby reducing the shaking of the vehicle frame.

The elastic suspension assembly 10 further includes a second bracket 130. The second bracket 130 is fixedly connected to the connecting pin 170. The second bracket 130 has an mounting channel, and the linear rotation mechanism 180 is located in the mounting channel with a gap between the linear rotation mechanism 180 and the mounting channel. Due to the fixed connection of the second bracket 130, the differential drive assembly 20 and the connecting pin 170 to each other, the gap allows the second bracket 130 to swing relative to the linear rotation mechanism 180 (e.g. swing downward, swing upward).

As an example, the second bracket 130 may include a second connecting plate 131 and a vertical plate 132. The second connecting plate 131 is fixedly connected to the vertical plate 132, and the vertical plate 132 is fixedly connected to the connecting pin 170. In some examples, the vertical plate 132 has a second through-hole, and the connecting pin 170 is fixedly inserted into and connected to the second through-hole. For example, the connecting pin 170 is interference fit with the second through-hole; for another example, the connecting pin 170 is inserted into and connected to the second through-hole and fixed by a screw or a key. In other examples, the second through-hole is coaxially arranged with the third through-hole. In other examples, the number of vertical plates 132 can be one or two. In some examples, the second connecting plate 131 has a fourth through-hole (i.e., the mounting channel mentioned above), and an axis of the fourth through-hole coincides with the axis of the first part 161 of the transmission shaft 160. The linear rotation mechanism 180 is in clearance fit with the fourth through-hole. In some examples, the second connecting plate 131 is located above the connecting pin 170.

The elastic suspension assembly 10 further includes a blocking mechanism 190 configured to block the rotation of the transmission shaft 160. The blocking mechanism 190 includes a first blocking member 191 and a second blocking member 192. The first blocking member 191 is arranged on the first bracket 110, and the second blocking member 192 is fixedly arranged on the second bracket 130; wherein, in the case that the first blocking member 191 is in contact with the second blocking member 192, the transmission shaft 160 is prevented from continuing to rotate, so that the transmission shaft 160 will not rotate by 360°.

Next, the structure of the differential drive assembly 20 will be explained.

As an example, the differential drive assembly 20 includes transmissions 210 (the number of transmissions 210 is multiple, such as two or at least three), a drive mechanism 230, and travelling wheels 220 (the number of travelling wheels 220 is multiple, such as two or at least three); the drive mechanism 230 is fixedly connected to the transmissions 210, and an output shaft of the drive mechanism 230 is connected to input shafts of the transmissions 210; the travelling wheels 220 are coaxially connected to the output shafts of the transmissions 210; the transmissions 210 are fixedly connected to the second bracket 130.

When the drive mechanism 230 enters the working state and allows its output shaft to rotate, the output shaft of the drive mechanism 230 drives the input shafts of the transmissions 210 to rotate, and the output shafts of the transmissions 210 drives the travelling wheels 220 to roll. In some examples, the rotation speed of the drive mechanism 230 is constant, and the rotation ratio of the input shaft to the output shaft of the transmission 210 is changed by controlling the transmission 210, thereby the rotation speed of the travelling wheel 220 is changed. In other examples, the rotation ratio of the input shaft to output shaft of the transmission 210 is constant, and the rotation speed of the travelling wheel 220 is changed by changing the rotation speed of the drive mechanism 230. Wherein, the drive mechanism 230 may be a motor which may be for example a forward and reverse motor, servo motor, variable speed motor, etc.

As an example, the transmissions 210 are fixedly connected to the second connecting plate 131.

As an example, the number of drive mechanisms 230, the number of transmissions 210, and the number of travelling wheels 220 may all be two. The two travelling wheels 220 are symmetrically arranged, and the travelling wheels 220 are fixedly connected to the output shafts of the transmissions 210 coaxially; the input shafts of the two transmissions 210 are respectively connected to shaft ends of two drive mechanisms 230.

In some examples, the rotation ratio of the input shaft to output shaft of the transmission 210 is constant. If the rotation speeds of the two drive mechanisms 230 are controlled to be the same, to enable the rolling speeds of the two travelling wheels 220 to be the same, then the two travelling wheels 220 are in linear movement (such as forward or backward); if the rotation speeds of the two drive mechanisms 230 are controlled to be different, to enable the rolling speeds of the two travelling wheels 220 to be different, then the two travelling wheels 220 turn around (such as turn left, turn right, etc.). When the travelling wheels 220 turn around (which rotates along the axis of the transmission shaft 160), the differential drive assembly 20 turns around. Due to the connection relationship among the transmission 210, connecting pin 170, and transmission shaft 160, the differential drive assembly 20 drives the transmission shaft 160 to rotate around the axis of the transmission shaft 160, thereby the vehicle frame moves in the direction of rotation of the differential drive assembly 20.

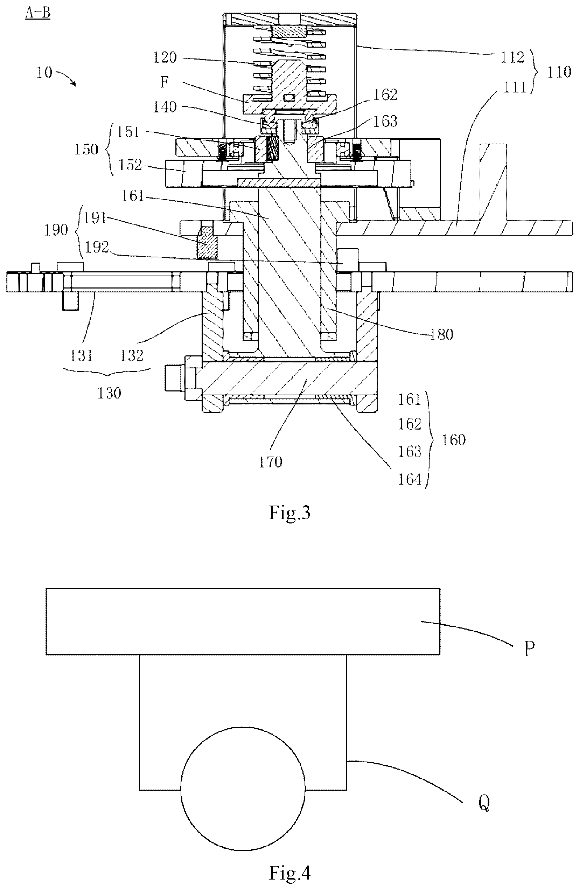

Referring to Fig. 4, an embodiment of the present disclosure further provides a robot. The robot may be an Automated Guided Vehicle (AGV) or an Autonomous Mobile Robot (AMR). The robot may include the differential drive device Q and the vehicle frame P as mentioned in the above embodiments. The vehicle frame P is fixedly connected to the elastic suspension assembly of the differential drive device Q. As an example, the vehicle frame P is fixedly connected to the first bracket. For example, the vehicle frame P is fixedly connected to the first connecting plate. For another example, the vehicle frame P is fixedly connected to the pressure cap. Thus, the elastic suspension assembly is enabled to be fixedly connected to the vehicle frame P. The robot may further include a control apparatus. The control apparatus (such as a controller) controls the differential drive assembly (such as controls the drive mechanism and transmission in the differential drive assembly).

The above are only specific embodiments of the present disclosure, but the scope of protection of the present disclosure is not limited to this. Changes or replacements obtained by any skilled in the art within the technical scope disclosed in the present disclosure, should be included in the scope of protection of the present disclosure. Therefore, the scope of protection of the present disclosure should be defined by the scope of protection of the claims.

## Claims

1. A differential drive device comprising an elastic suspension assembly and a differential drive assembly;
the elastic suspension assembly comprises:
a first bracket;
a linear rotation mechanism fixedly connected to the first bracket and having a linear guide channel;
a transmission shaft having a first part and a second part distributed along an axial direction of the transmission shaft; wherein the axial direction of the transmission shaft is the same as an extension direction of the linear guide channel; the first part is inserted into and connected to the linear guide channel of the linear rotation mechanism, and the first part can rotate around its own axis in the linear guide channel and move along the extension direction of the linear guide channel; the differential drive assembly is located on one side of the first part away from the second part and is connected to the first part, and the transmission shaft can be driven by the differential drive assembly to move;
an elastic member rotatably connected to the second part, wherein the elastic member undergoes elastic deformation or elastic recovery as the first part moves along the extension direction of the linear guide channel.

2. The differential drive device according to claim 1, wherein,
the first bracket comprises a first connecting plate and a pressure cap; the linear rotation mechanism penetrates the first connecting plate and is fixedly connected to the first connecting plate; the pressure cap abuts against an end of the elastic member away from the transmission shaft and is fixed to the first connecting plate.

3. The differential drive device according to claim 1, wherein,
the elastic suspension assembly further comprises a rotary mechanism and a magnetic member; the rotary mechanism comprises a first sliding part and a second sliding part which rotate synchronously; the first sliding part and the second sliding part can move relative to each other along an axial direction of the linear guide channel; the transmission shaft further has a third part located between the first part and the second part, and the first sliding part is fixedly connected to the third part; the first bracket is rotatably connected to the second sliding part and further prevents movement of the second sliding part along the axial direction of the linear guide channel; and the magnetic member is arranged on the second sliding part.

4. The differential drive device according to claim 3, wherein,
the first sliding part is a gear, the second sliding part is a gear ring, and the gear ring is adaptively and coaxially sleeved on the gear.

5. The differential drive device according to claim 3, wherein,
diameters of the first part, the third part, and the second part decrease sequentially.

6. The differential drive device according to claim 1, wherein,
the elastic suspension assembly further comprises a connecting pin; the transmission shaft further has a fourth part located on one side of the first part away from the second part; the fourth part is rotatably connected to the connecting pin, and the connecting pin is fixedly connected to the differential drive assembly.

7. The differential drive device according to claim 6, wherein,
the elastic suspension assembly further comprises a second bracket which is fixedly connected to the connecting pin; the second bracket has an mounting channel, and the linear rotation mechanism is located in the mounting channel with a gap between the linear rotation mechanism and the mounting channel;
the differential drive assembly comprises a transmission, a drive mechanism, and a travelling wheel; the drive mechanism is fixedly connected to the transmission, and an output shaft of the drive mechanism is connected to an input shaft of the transmission; the travelling wheel is coaxially connected to an output shaft of the transmission; the transmission is fixedly connected to the second bracket.

8. The differential drive device according to claim 7, wherein,
the elastic suspension assembly further comprises a first blocking member and a second blocking member, the first blocking member is arranged on the first bracket, and the second blocking member is fixedly arranged on the second bracket; wherein, in a case that the first blocking member is in contact with the second blocking member, rotation of the transmission shaft is prevented.

9. The differential drive device according to claim 1, wherein,
the elastic suspension assembly further comprises a rotary bearing, and the elastic member is rotatably connected to the second part through the rotary bearing.

10. A robot, comprising:
the differential drive device according to any one of claims 1-9;
a vehicle frame fixedly connected to the elastic suspension assembly of the differential drive device.
